# EUROPÄISCHE PATENTSCHRIFT

(11) **EP 1 274 937 B1**
(45) Veröffentlichungstag und Bekanntmachung des Hinweises auf die Patenterteilung: **07.06.2006**
(21) Anmeldenummer: 01937974.2
(22) Anmeldetag: 09.04.2001
(51) Int. Cl.: F02N 15/04, F02N 11/04

(54) **VORRICHTUNG ZUM KUPPELN MINDESTENS EINES NEBENAGGREGATS MIT EINEM HAUPTAGGREGAT**
DEVICE FOR COUPLING AT LEAST ONE AUXILIARY ASSEMBLY TO A MAIN ASSEMBLY
DISPOSITIF PERMETTANT D'ACCOUPLER AU MOINS UN ENSEMBLE AUXILIAIRE A UN ENSEMBLE PRINCIPAL

(30) Priorität: 07.04.2000 DE 10016988
(43) Veröffentlichungstag der Anmeldung: 15.01.2003
(73) Patentinhaber: ROBERT BOSCH GMBH, 70442 Stuttgart (DE)
(72) Erfinder: GROB, Ferdinand, 74354 Besigheim (DE); TUMBACK, Stefan, 70469 Stuttgart (DE); SCHULZ, Marcus, 71638 Ludwigsburg (DE)
(86) Internationale Anmeldenummer: PCT/DE2001/001376
(87) Internationale Veröffentlichungsnummer: WO 2001/077521

(56) Entgegenhaltungen:
- EP-A- 0 384 808
- US-A- 4 862 009

## Beschreibung

### Stand der Technik

Die Erfindung betrifft eine Vorrichtung zum Kuppeln von zumindest einem Nebenaggregat mit einem Hauptaggregat, insbesondere eines Startergenerators mit einer Brennkraftmaschine, gemäß der Gattung des unabhängigen Anspruchs.

Vorrichtungen zum Kuppeln von Nebenaggregaten mit einem Hauptaggregat sind bereits bekannt aus der DE 196 13 291 A1. Die bekannte Vorrichtung weist ein Planetengetriebe mit einem Sonnenrad auf, das mit einer Antriebswelle drehfest verbunden ist. Um das Sonnenrad herum sind Planetenräder angeordnet, deren Achsen mit einer Riemenscheibe fest verbunden sind. Die Planetenräder wälzen auf einem Hohlrad ab, das mit einer Kupplungsvorrichtung verbunden ist. Diese Kupplungsvorrichtung weist zwei Schaltstufen auf, wobei in einer ersten Schaltstufe das Hohlrad mit den Planetenrädern drehfest verbindbar ist. In einer zweiten Schaltstufe ist das Hohlrad über die Kupplungsvorrichtung mit einem ortsfesten Rahmen verbindbar. Die Kupplungsvorrichtung ist mittels eines Elektromagneten schaltbar. In der ersten Stellung, in der der Elektromagnet nicht bestromt ist, ist das Hohlrad mit den Planetenrädern fest gekuppelt. In der zweiten Schaltposition ist das Hohlrad mit dem Rahmen fest verbunden.

Diese Vorrichtung weist den Nachteil auf, dass die Antriebswelle der Brennkraftmaschine immer mit dem Riementrieb gekuppelt ist. Dies ist insbesondere dann von Nachteil, wenn bei Stillstand der Brennkraftmaschine durch einen motorisch betriebenen Startergenerator ein Nebenaggregat über einen gemeinsamen Riementrieb angetrieben werden soll. Ein weiterer Nachteil dieser bekannten Vorrichtung ist, dass zum Verstellen der Übersetzung des Planetengetriebes in jedem Fall ein aktives Schaltelement, hier eine Magnetkupplung, notwendig ist. Hinzu kommt, dass die Vorrichtung von außen verstellt werden muss. Ein weiterer Nachteil ist, dass zum aktiven Umschalten der Magnetkupplung eine ständige Bestromung notwendig ist und demzufolge zusätzlich Energie aufgewendet werden muss.

Aus der EP 0384808 A ist eine Vorrichtung zum Kuppeln eines Nebenaggregats mit einem Hauptaggregat bekannt, wobei das Hauptaggregat mit einem Planetengetriebe verbunden ist und das Planetengetriebe mittels eines ersten Freilaufs zwischen zwei Übersetzungsverhältnissen umschaltbar ist. Ein Hohlradteil des Planetengetriebes ist in einer Drehrichtung durch eine zweite Kupplung feststellbar. Nachteilig ist hierbei, dass keine bedarfsgerechte Verstellung der Übersetzung des Planetengetriebes möglich ist.

### Vorteile der Erfindung

Mit der erfindungsgemäßen Vorrichtung mit den Merkmalen des unabhängigen Anspruchs ist es möglich, bei gemeinsamem Riementrieb zwischen Startergenerator, Brennkraftmaschine und einem weiteren Nebenaggregat dieses trotz Stillstand der Brennkraftmaschine anzutreiben, ohne dass auf die Brennkraftmaschine beziehungsweise das Hauptaggregat ein Moment übertragen wird. Dadurch ist es beispielsweise möglich, von einem motorisch betriebenen Nebenaggregat wie dem Startergenerator über das Rad der erfindungsgemäßen Vorrichtung ein Drehmoment beispielsweise auf einen Klimakompressor zu übertragen, ohne dabei auf das Hauptaggregat beziehungsweise dessen Antriebswelle ein Moment zu übertragen. Dies ist insbesondere dann von Vorteil, wenn das Hauptaggregat ausgeschaltet ist, sich also dessen Antriebswelle nicht dreht. Dies ist dann der Fall, wenn ein Fahrzeug mit einem stillstehenden Hauptaggregat weiterhin mit einem mechanisch angetriebenen Klimakompressor klimatisiert werden soll.

Durch die in den Unteransprüchen aufgeführten Merkmale sind weitere vorteilhafte Ausgestaltungen der Vorrichtung nach dem Hauptanspruch möglich.

Ist der Planetenträger mit einer Antriebswelle - oftmals auch Kurbelwelle bezeichnet - der Brennkraftmaschine drehfest verbunden, ergibt sich das Übersetzungsverhältnis von eins zwischen der Antriebswelle und dem Rad beziehungsweise der Riemenscheibe, wenn die Fliehkraftkupplung greift. Das ist insbesondere dann von Vorteil, wenn die Antriebswelle einen generatorisch arbeitenden Startergenerator über die Riemenscheibe antreibt.

Ist das Sonnenrad des Planetengetriebes mit einem Rad des Getriebes drehfest verbunden, kann eine günstige Untersetzung des Planetengetriebes mit hohem Drehmoment für den Kaltstart einer Brennkraftmaschine erreicht werden.

Ist das Hohlradteil gegenüber einem ortsfesten unbeweglichen Teil in einer ersten Drehrichtung drehbar und in einer zweiten Drehrichtung blockierbar, so ist einerseits für den Kaltstartfall ein hohes Drehmoment an der Antriebswelle bewirkbar, andererseits wird dadurch ein Umschalten des Planetengetriebes mit dem beginnenden Selbstlauf der Brennkraftmaschine erreicht und dadurch schädliche Drehzahlen für das Nebenaggregat vermieden.

Eine reibschlüssige Fliehkraftkupplung hat den Vorteil eines besonders sanften Kupplungsvorgangs, während eine formschlüssige Fliehkraftkupplung ein besonders hohes Drehmoment übertragen kann.

### Zeichnungen

Die Erfindung wird nachstehend in mehreren Ausführungsbeispielen an Hand der zugehörigen Zeichnungen näher erläutert. Es zeigen:
Fig. 1 eine erste Anordnung eines Hauptaggregats der erfindungsgemäßen Vorrichtung und zwei Nebenaggregate,
Fig. 2 eine zweite Anordnung des Hauptaggregats mit der erfindungsgemäßen Vorrichtung und zwei Nebenaggregaten mit einem Zahnradantrieb,
Fig. 3 zeigt eine Schemazeichnung der Vorrichtung,
Fig. 4 zeigt ein konstruktives Beispiel der schematischen Vorrichtung aus Fig. 3,
Fig. 5 zeigt ein Beispiel für eine Fliehkraftkupplung für eine Vorrichtung nach Fig. 4,
Fig. 6 zeigt ein weiteres Beispiel für eine Fliehkraftkupplung, hier ausgeführt als Reibkupplung,
Fig. 7 zeigt ein weiteres Ausführungsbeispiel für eine erfindungsgemäße Vorrichtung,
Fig. 8 zeigt eine schematische Darstellung des Schnitts aus Fig. 7 entlang der Linien VII-VII.

### Beschreibung der Ausführungsbeispiele

Identische bzw. gleichwirkende Bauteile sind mit gleichen Bezugszeichen bezeichnet.

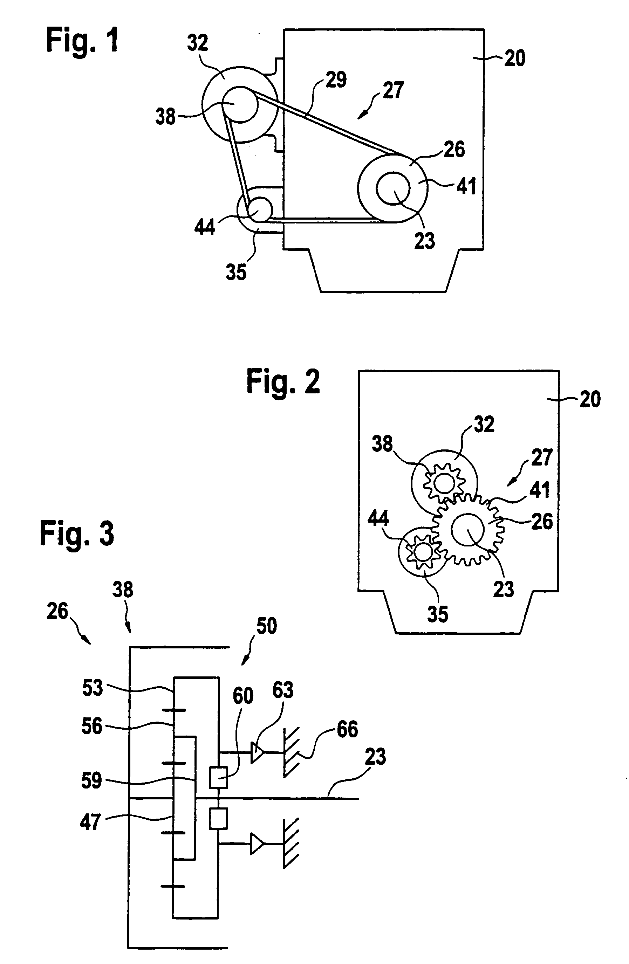

Fig. 1 zeigt eine Anordnung eines Hauptaggregats 20 in einer Ausführung als Brennkraftmaschine. Das Hauptaggregat 20 hat eine Antriebswelle 23, die mit einer Vorrichtung 26 verbunden ist. Durch die Vorrichtung 26 ist mittels eines Getriebes 27 mit einem Nebenaggregat 32, ausgeführt als sogenannter Startergenerator, verbunden. Das Getriebe 27 ist als Zugmittelgetriebe ausgeführt. Weiterhin wird über das Zugmittel 29 als weiteres Nebenaggregat 32 ein Klimakompressor 35 angetrieben. Das Zugmittel 29 umschlingt dabei ausgehend vom Startergenerator ein Rad 38 am Startergenerator, ein Rad 41 der Vorrichtung 26 und ein Rad 44 des Klimakompressors 35. Alle Räder 38, 41 und 44 sind hier beispielsweise Riemenscheiben oder Kettenräder. Ein weiteres Ausführungsbeispiel für das Getriebe 27 ist in Fig. 2 dargestellt. Dabei sind die Räder 38, 41 und 44 als Zahnräder ausgebildet, die alle zusammen somit einen Zahnradtrieb bilden.

In Fig. 3 ist die Vorrichtung 26 schematisch dargestellt. Das Rad 38 ist einstückig mit einem Sonnenrad 47 eines Planetengetriebes 50 ausgebildet. Das Planetengetriebe 50 weist ein Hohlradteil 53 und Planetenräder 56 auf, die üblicherweise mit dem Hohlradteil 53 und dem Sonnenrad 47 in Eingriff sind. Die Planetenräder 56 sind an einem Planetenträger 59 drehbar gelagert. Der Planetenträger 59 ist mit der Antriebswelle 23 drehfest verbunden. Die Antriebswelle 23 ist mittels einer ersten Kupplung 60 mit dem Hohlradteil 53 kuppelbar. Die erste Kupplung 60 ist dabei als Fliehkraftkupplung ausgebildet. Das Hohlradteil 53 wiederum ist mit einer zweiten Kupplung 63 mit der ortsfesten Umgebung 66 kuppel- und damit in einer Richtung feststellbar. Die zweite Kupplung 63 ist als Freilaufkupplung ausgebildet, die ortsfeste Umgebung 66 ist hier beispielsweise das Gehäuse einer Brennkraftmaschine d. h. des Hauptaggregats 20. Beide Kupplungen sind von einander unabhängig schaltbar.

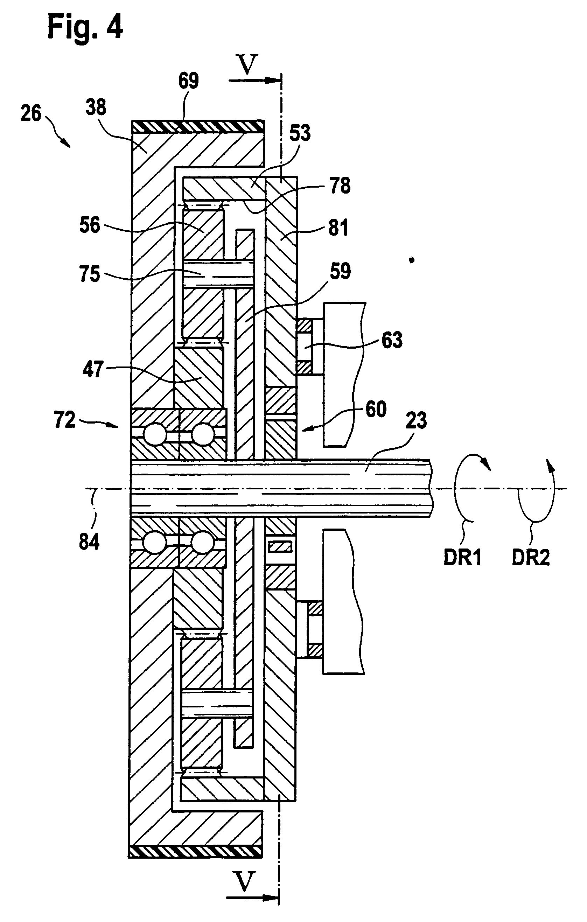

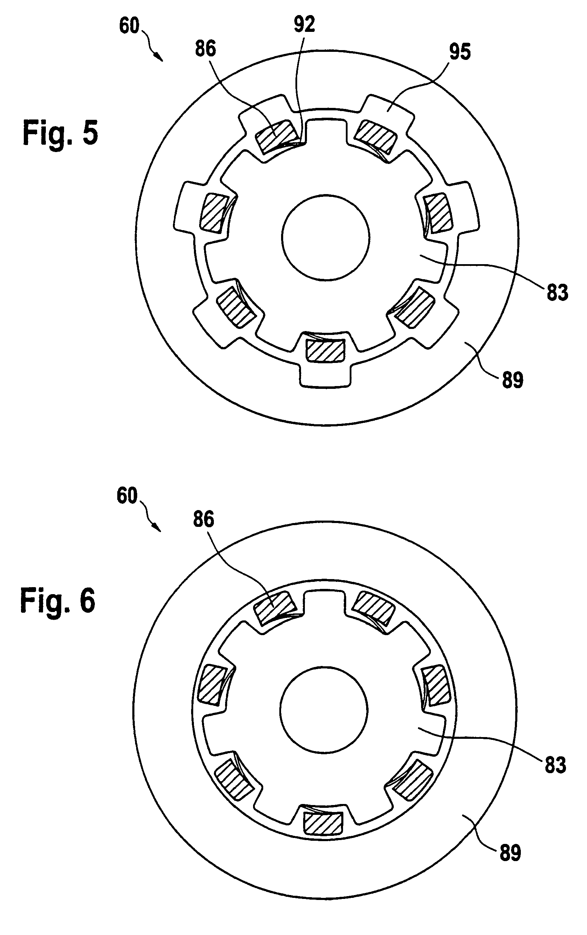

In Fig. 4 ist die Vorrichtung 26 konstruktiv konkretisiert. Auf dem Rad 38 liegt am Umfang ein Riemen 69 zur Drehmomentübertragung bzw. Kraftübertragung auf. Über diesen Riemen 69 wird die Kraft entweder vom Startergenerator auf die Vorrichtung 26 übertragen oder es wird die über die Antriebswelle 23 auf die Vorrichtung 26 übertragene Kraft bzw. das Drehmoment über den Riemen 69 auf den Startergenerator übertragen. Das Sonnenrad 47 ist am Rad 38 befestigt und kann mit diesem auch einstückig ausgeführt sein. Das Rad 38 ist über ein Lager 72 auf der Antriebswelle 23 drehbar gelagert. Die Planetenräder 56 sind auf Bolzen 75 drehbar gelagert. Das Hohlradteil 53 hat neben einer Hohlradverzahnung auch einen sich in etwa scheibenförmig erstreckenden und die Hohlradverzahnung 78 tragenden Plattenbereich 81. Am Plattenbereich 81 befindet sich auf einer den Planetenrädern 56 abgewandten Seite die zweite Kupplung 63. Die erste Kupplung 60 ist in Fig. 5 näher dargestellt. Bei einer Antriebswellenachse 84 sind die vereinbarten Drehrichtungen für diese Erfindung dargestellt. Die erste Drehrichtung DR1 entspricht bei Draufsicht auf das Lager 72 im Beispiel einer Drehung gegen den Uhrzeigersinn. Die zweite Drehrichtung DR2 entspricht bei Draufsicht auf das Lager 72 der Drehung im Uhrzeigersinn.

In Fig. 5 ist eine Seitenansicht der ersten Kupplung 60 - ausgeführt als Fliehkraftkupplung - dargestellt. Die Darstellung der ersten Kupplung 60 in Fig. 5 entspricht der Ansicht wie sie in Fig. 4 mit V gekennzeichnet ist. Die erste Kupplung 60 besteht aus einem Innenteil 84, am Umfang verteilten Kupplungskörpern 86 sowie einem Außenteil 89. Das Außenteil 89 ist entweder ein Einsatz im Plattenbereich 81 oder es ist einstückig aus dem Plattenbereich 81 ausgearbeitet. Die Kupplungskörper 86 sind mittels eines Federelements 92 mit dem Innenteil 83 verbunden. Wird das Innenteil 83 verdreht, bewegen sich die Kupplungskörper 86 gegen den Widerstand des Federelements 92 nach radial außen und greifen ab einer bestimmten radialen Lage in Aussparungen 95 des Außenteil 89 ein. Ab diesem Eingreifen wird das Außenteil 89 durch das Innenteil 83 mitgenommen. Die in Fig. 5 dargestellte Fliehkraftkupplung wirkt dementsprechend als eine formschlüssige Fliehkraftkupplung.

In Fig. 6 ist eine reibschlüssige Fliehkraftkupplung dargestellt, die im Prinzip die gleichen Aufgaben wie die Kupplung in Fig. 5 übernimmt. Der wesentliche Unterschied ist, dass der Mitentnahmeeffekt des Außenteils 89 durch die Kupplungskörper 86 deutlich sanfter verläuft, da die Kupplungskörper 86 lediglich reibschlüssig mit dem Außenteil 89 kuppeln.

Nachfolgend wird die Funktion des in Fig. 4 dargestellten Ausführungsbeispiels beschrieben. Als erste Kupplung 60 wird dabei das in Fig. 5 dargestellte Beispiel angenommen. Die Funktion der Vorrichtung mit der Kupplung 60 aus Fig. 6 wird nachfolgend nicht beschrieben, da die Wirkung im Wesentlichen gleich ist. Im Starterbetrieb ist die erste Kupplung 60 - d. h. die Fliehkraftkupplung - geöffnet. Dabei wird das Rad 38 durch den Startergenerator angetrieben, wobei durch die Momenten- und Kraftverhältnisse im Planetengetriebe 50 die zweite Kupplung 63, d. h. der Freilauf sperrt. Das Hohlradteil 53 wird dadurch festgehalten. Das Planetengetriebe 50 ist dann mit seiner Untersetzung wirksam, so dass das Rad 38 beispielsweise drei Umdrehungen durchführt, während der Planetenträger 59 eine Umdrehung durchführt. Dadurch wird ein verhältnismäßig hohes Drehmoment an der Antriebswelle 23 wirksam, so dass auch ein Kaltstart des Motors problemlos möglich ist. Übersteigt die Antriebswelle 23 nach dem beginnenden Selbstlauf des Hauptaggregats 20 eine bestimmte Grenzdrehzahl, so greift die erste Kupplung 60 in das sich eventuell bereits drehende Hohlradteil 53, weil die Kupplungskörper 86 durch die wirkende Fliehkraft in das Außenteil 89 eingreifen. Das Planetengetriebe 50 läuft dann als Block um, so dass das Rad 38 mit der gleichen Drehzahl wie die Antriebswelle 23 dreht.

Das nunmehr selbstlaufende Hauptaggregat 20 bzw. die Brennkraftmaschine dreht sich mit ausreichend hoher Drehgeschwindigkeit und treibt dann den Startergenerator generatorisch an.

Eine Standklimatisierung findet statt, wenn das Hauptaggregat 20 stillgelegt ist und die Antriebswelle 23 nicht mehr rotiert. Um nun eine Standklimatisierung zu erreichen, treibt der Startergenerator in nunmehr umgekehrter Drehrichtung gegenüber dem Starter- bzw. Generatorbetrieb das Rad 38 an. Die zweite Kupplung 63 ist in dieser Betriebsart offen, so dass das Hohlradteil 53 frei dreht und kein Drehmoment auf die Antriebswelle 23 übertragen wird. Der Klimakompressor 35 wird dann mit der umgekehrten Drehrichtung angetrieben. Dies ist insbesondere bei mechanischen Klimakompressoren 25 problemlos möglich.

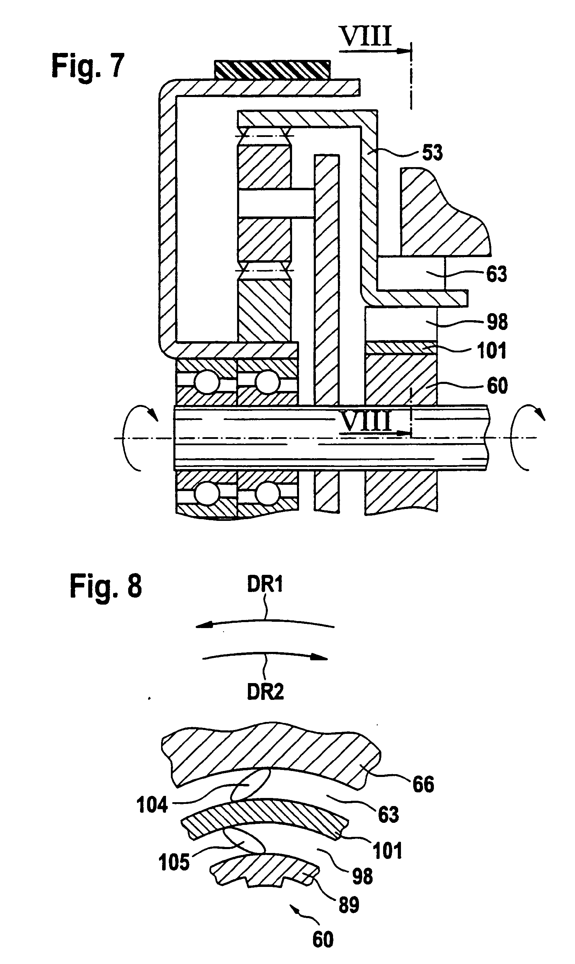

In einem weiteren Ausführungsbeispiel nach Fig. 7 ist zwischen das Hohlradteil 53 und zwischen die erste Kupplung 60 eine dritte Kupplung 98 angeordnet. Diese dritte Kupplung 98 ist wiederum als Freilaufkupplung ausgebildet. Die Lage der zweiten Kupplung 63 ist dabei gleichwirkend zu der Anordnung, wie sie in Fig. 4 dargestellt ist. In Fig. 8 ist ein Teilquerschnitt der Kupplungsanordnung aus Fig. 7 entlang der Linie VII-VII dargestellt. Die Drehbewegung eines Außenrings 101 der dritten Kupplung 98 ist gegenüber der ortsfesten Umgebung 66 durch die Klemmkörper 104 daran gehindert in der zweiten Drehrichtung DR2 zu drehen. Das Außenteil 89 der ersten,Kupplung 60 ist durch die Klemmkörper 105 der dritten Kupplung 98 wiederum daran gehindert, gegenüber dem Außenring 101 in der ersten Drehrichtung DR1 zu drehen. Gegenüber dem Ausführungsbeispiel nach Fig. 4 mit der Kupplung nach Fig. 5 bzw. Fig. 6 ist im Startfall die Stellung der ersten Kupplung 60 nun ohne Einfluss, da die dritte Kupplung 98 in dieser Situation geöffnet ist. Während des Starts kann die erste Kupplung 60 also zu einem beliebigen Zeitpunkt schließen. Im generatorischen Betrieb übertragen dann die erste Kupplung 60 und die zweite Kupplung 98 das Drehmoment zum Antrieb des Startergenerators.

## Patentansprüche

1. Vorrichtung zum Kuppeln mindestens eines Nebenaggregates (32), insbesondere eines Startergenerators, mit einem Hauptaggregat (20), insbesondere einer Brennkraftmaschine, wobei das zumindest eine Nebenaggregat (32) und die Vorrichtung zum Kuppeln (26) durch ein Getriebe (27) miteinander verbunden sind, mit einem Planetengetriebe (50), das das Hauptaggregat (20) mit dem Getriebe (27) verbindet, wobei das Planetengetriebe (50) mittels einer ersten Kupplung (60) zwischen zwei Übersetzungsverhältnissen umschaltbar ist, **dadurch gekennzeichnet, dass** die erste Kupplung (60) eine Fliehkraftkupplung ist und ein Hohlradteil (53) des Planetengetriebes (50) in einer Drehrichtung durch eine zweite Kupplung (63) feststellbar ist.

2. Vorrichtung nach Anspruch 1, **dadurch gekennzeichnet, dass** ein Planetenträger (59) mit einer Antriebswelle (23) des Hauptaggregats (20) und ein Sonnenrad (47) des Planetengetriebes (50) mit einem Rad (38) des Getriebes (27) drehfest verbunden ist.

3. Vorrichtung nach einem der vorhergehenden Ansprüche, **dadurch gekennzeichnet, dass** das Hohlradteil (53) gegenüber einem ortsfesten unbeweglichen Teil (66) in einer ersten Drehrichtung (DR1) drehbar ist.

4. Vorrichtung nach einem der vorhergehenden Ansprüche, **dadurch gekennzeichnet, dass** das Hohlradteil (53) mittels der ersten Kupplung (60) mit einer Antriebswelle (23) des Hauptaggregats (20) kuppelbar ist.

5. Vorrichtung nach einem der vorstehenden Ansprüche, **dadurch gekennzeichnet, dass** die erste Kupplung (60) als Fliehkraftkupplung mit Reibschluss oder Formschluss ausgeführt ist.

6. Vorrichtung nach einem der vorhergehenden Ansprüche, **dadurch gekennzeichnet, dass** eine dritte Kupplung (98) zwischen dem Hohlradteil (53) und der ersten Kupplung (60) angeordnet ist, wobei die dritte Kupplung (98) eine Freilaufkupplung ist und eine Relativdrehung des Außenrings (101) gegenüber dem Außenteil (89) in der ersten Drehrichtung (DR1) möglich ist.

## Claims

1. Device for coupling at least one secondary assembly (32), in particular a starter generator, to a main assembly (20), in particular an internal combustion engine, the at least one secondary assembly (32) and the coupling device (26) being connected to one another by means of a transmission (27), with an epicyclic transmission (50) which connects the main assembly (20) to the transmission (27), the epicyclic transmission (50) being capable of being changed over between two transmission ratios by means of a first clutch (60), **characterized in that** the first clutch (60) is a centrifugal clutch, and a ring-wheel part (53) of the epicyclic transmission (50) is capable of being locked in one direction of rotation by means of a second clutch (63).

2. Device according to Claim 1, **characterized in that** a planet carrier (59) is connected fixedly in terms of rotation to a drive shaft (23) of the main assembly (20) and a sun wheel (47) of the epicyclic transmission (50) is connected fixedly in terms of rotation to a wheel (38) of the transmission (27).

3. Device according to one of the preceding claims, **characterized in that** the ring-wheel part (53) is rotatable with respect to a fixed immovable part (66) in a first direction of rotation (DR1).

4. Device according to one of the preceding claims, **characterized in that** the ring-wheel part (53) is couplable to a drive shaft (23) of the main assembly (20) by means of the first clutch (60).

5. Device according to one of the preceding claims, **characterized in that** the first clutch (60) is designed as a centrifugal clutch with frictional connection or positive connection.

6. Device according to one of the preceding claims, **characterized in that** a third clutch (98) is arranged between the ring-wheel part (53) and the first clutch (60), the third clutch (98) being an overrunning clutch, and a relative rotation of the outer ring (101) with respect to the outer part (89) being possible in the first direction of rotation (DR1).

## Revendications

1. Dispositif permettant d'accoupler au moins un groupe auxiliaire (32), en particulier un générateur-démarreur, à un groupe principal (20), en particulier un moteur à combustion interne, le groupe auxiliaire (32) et le dispositif d'accouplement (26) étant reliés entre eux par l'intermédiaire d'une boîte de vitesses (27), avec un engrenage planétaire (50) qui relie le groupe principal (20) à la boîte de vitesses (27), l'engrenage planétaire (50) étant commutable au moyen d'un premier embrayage (60) entre deux rapports de démultiplication,
**caractérisé en ce que**
le premier embrayage (60) est un embrayage centrifuge et une partie de roue creuse (53) de l'engrenage planétaire (50) est réglable dans une direction de rotation par un deuxième embrayage (63).

2. Dispositif selon la revendication 1,
**caractérisé en ce qu'**
un porte-satellites (59) est relié de façon non rotative à un arbre d'entraînement (23) du groupe principal (20), et une roue solaire (47) de l'engrenage planétaire (50) est reliée de façon non rotative à une roue (38) de la boîte de vitesses (27).

3. Dispositif selon l'une des revendications précédentes,
**caractérisé en ce que**
la partie de roue creuse (53) est rotative par rapport à une partie fixe non mobile (66) dans une première direction de rotation (DR1).

4. Dispositif selon l'une des revendications précédentes,
**caractérisé en ce que**
la partie de roue creuse (53) peut être accouplée au moyen du premier embrayage (60) avec un arbre d'entraînement (23) du groupe principal (20).

5. Dispositif selon l'une des revendications précédentes,
**caractérisé en ce que**
le premier embrayage (60) est un embrayage centrifuge à frottement ou à complémentarité de forme.

6. Dispositif selon l'une des revendications précédentes,
**caractérisé en ce qu'**
un troisième embrayage (98) est disposé entre la partie de roue creuse (53) et le premier embrayage (60), le troisième embrayage (98) étant un embrayage à roue libre, avec possibilité de rotation relative de la bague extérieure (101) par rapport à la partie extérieure (89) dans la première direction de rotation (DR1).
